# EUROPÄISCHE PATENTSCHRIFT

(11) **EP 0 529 203 B1**
(45) Veröffentlichungstag und Bekanntmachung des Hinweises auf die Patenterteilung: **13.12.1995**
(21) Anmeldenummer: 92108467.9
(22) Anmeldetag: 20.05.1992
(51) Int. Cl.: A62D 3/00, B27K 3/00, C10B 53/02, B09B 3/00

(54) **Verfahren zur Entsorgung von mit Teer imprägniertem Holz**
Process for the disposal of wood impregnated with tar
Procédé pour éliminer du bon imprégné de goudron

(30) Priorität: 23.08.1991 DE 4127777
(43) Veröffentlichungstag der Anmeldung: 03.03.1993
(73) Patentinhaber: VFT AG, 47138 Duisburg (DE)
(72) Erfinder: Wilhelm, Gerhard, Dr., W-6802 Ladenburg (DE); Klassert, Anton, Dr., W-4620 Castrop-Rauxel (DE)
(74) Vertreter: Cohausz & Florack Patentanwälte

(56) Entgegenhaltungen:
- EP-A- 0 069 159
- EP-A- 0 298 951
- DE-C- 334 307
- GB-A- 2 193 200

## Beschreibung

Mit Teeröl imprägnierte Holzschwellen sind ein wichtiges Bauglied von Eisenbahnlinien. Jedoch ist ihre Verwendbarkeit im Gleisbau zeitlich limitiert, so daß diese Schwellen nach ihrem Gebrauch entsorgt werden müssen. Der bisherige Einsatz der gebrauchten Schwellen im Garten- und Landschaftsbau ist aufgrund neuerer Verordnungen zukünftig nicht mehr gegeben, so daß bislang lediglich das Verbrennen verbleibt. Aber auch die Verbrennung kann nur in speziellen Anlagen erfolgen, da derartige gebrauchte Schwellen insbesondere aufgrund ihres Gehaltes an polycyclischen, aromatischen Verbindungen als Sondermüll angesehen werden.

Analog sind die Schwierigkeiten bei anderen teerölimprägnierten Hölzern. Es ist daher ein akutes Problem, mit Teeröl imprägniertes Holz nach seinem Gebrauch zu entsorgen.

Aus DE-C 03 34 307 ist bekannt, aus gebrauchtem, imprägniertem Holz durch fraktionierte Destillation wieder Konservierungsmittel zu gewinnen. Dabei ist es aber nicht möglich, alle Schadstoffe zu entfernen. Bei mit Teerölen imprägnierten Hölzern verbleiben insbesondere cancerogene polycyclische Aromaten im Holz und verhindern so dessen sinnvollen weiteren Gebrauch.

Gemäß EP-A 0 298 951 wird imprägniertes Holz, ggf. auch nach einer Pyrolysebehandlung bis etwa 400° C mit Lösemittelgemischen extrahiert um verbleibende Schadstoffe aus dem Holz bzw. der Holzkohle zu entfernen.

Dieses Verfahren ist allerdings sehr aufwendig, denn die erhaltenen Schadstofflösungen müssen auch wieder aufgearbeitet werden.

Es ist daher Aufgabe der Erfindung ein wirtschaftliches Verfahren bereitzustellen, bei dem aus dem teerölimprägnierten Holz ein hochwertiges Produkt entsteht, das frei ist von toxischen Stoffen.

Die Lösung der Aufgabe erfolgt durch ein Verfahren zur Entsorgung von mit Teeröl imprägniertem Holz, gemäß der Ansprüche 1 bis 8.

Es wurde gefunden, daß sich mit Teeröl imprägniertes Holz durch Wärmebehandlung unter Luftabschluß in ein festes holzkohleartiges Produkt umwandeln läßt, das frei ist von toxischen Stoffen und insbesondere frei ist von polycyclischen aromatischen Verbindungen. Die Temperatur liegt dabei im Bereich von 400 bis 700°C bevorzugt im Bereich von 450 bis 600°C. Die Behandlungsdauer nimmt mit der Größe der zu behandelnden Hölzer zu und vermindert sich mit steigender Behandlungstemperatur. Sie liegt im allgemeinen im Bereich von mehreren Stunden bevorzugt im Bereich von 12 bis 20 h. Vorteilhafterweise zeigte sich, daß die Behandlungsdauer teerölimprägnierter Hölzer etwa 10 % kürzer sein kann als die Verkohlungszeit entsprechender luftgetrockneter Hölzer unter analogen Bedingungen. Die Temperaturbehandlung erfolgt nach aus der Holzverkohlung an sich bekannten Verfahren entweder unter Unterdruck oder bei Normal- oder Überdruck. Sie erfolgt bevorzugt unter Anwendung eines 500 bis 600°C heißen Spülgases, das für eine optimale Wärmeübertragung sorgt.

Bei dieser Wärmebehandlung entstehen neben dem festen Produkt Nebenprodukte wie Gase (wie z. B. Kohlendioxid und Methan), Wasser, Holzgeist, Essigsäure, Holzteer sowie ein aus dem Imprägnieröl stammendes Redestillat. Diese Nebenprodukte werden, soweit sie einen Kochpunkt oberhalb 30°C haben, kondensiert, die wäßrige Phase von der öligen Phase getrennt und nach an sich bekannten Verfahren (vergleich Ullmanns Encyklopädie der technischen Chemie, 4. Auflage, Band 12, Seite 703 bis 708) aufgearbeitet. Das aus dem Imprägnieröl stammende Redestillat kann entweder zusammen mit Steinkohlenteer einer Destillation zugeführt werden oder direkt als Rußöl verwandt werden oder zusammen mit dem Holzteer als Imprägnieröl eingesetzt werden. Die Gase, die einen Brennwert haben, können zur thermischen Behandlung des impränierten Holzes genutzt werden.

Je nach Art des imprägnierten Holzes und je nach angewandtem Imprägnierverfahren enthalten mit Teeröl imprägnierte Hölzer zwischen 4 und 40 Gew.-% Teeröle. Es wurde gefunden, daß bei einer erfindungsgemäßen thermischen Behandlung dieser imprägnierten Hölzer ein Teil des Teeröls als Destillat entweicht, während der Rest, vorwiegend die höher siedenden Anteile, im Holz verbleibt und verkokt. Dabei werden alle hochsiedenden toxischen oder cancerogenen Teerölinhaltsstoffe, insbesondere die polycyclischen Aromaten in nicht toxischen Kohlenstoff umgewandelt. Die Menge der im Holz verbleibenden und verkokenden Teerölanteile läßt sich sowohl durch den Druck während der Wärmebehandlung als auch durch die Temperaturführung steuern. Wird die Wärmebehandlung unter Unterdruck durchgeführt, destilliert mehr Teeröl ab, als bei thermischer Behandlung bei Normal- oder Überdruck. Desweiteren destilliert mehr Teeröl ab, wenn die Aufheizrate langsam erfolgt, während bei schnellem Termperaturanstieg auf Werte oberhalb 450°C die Verkokungsrate ansteigt. Dies gestattet es, durch die Wahl der Reaktionsbedingungen die gewünschten Endeigenschaften des Produktes gezielt anzusteuern. Ein hoher Anteil an verkokten Teerölbestandteilen (2 bis 10 Gew.-% des Fertigproduktes) bewirkt eine Verringerung des Porenvolumens und eine Erhöhung der Dichte und der Druckfestigkeit des Produktes. Diese Produkte eignen sich daher vorwiegend als Brennmaterial, insbesondere als Grillkohle oder in pelletisiertem Zustand als Grillbriketts.

Dementsprechend bewirkt ein niedriger Anteil an verkokten Teerölbestandteilen (0,2 bis 2,0 Gew.-%) im Produkt nur eine relativ geringe Änderung dieser Eigenschaften, verglichen mit denen der entsprechenden reinen Holzkohle. Das heißt, Porenvolumina im Bereich von 40 bis 60 m²/g erlauben eine Anwendung dieser Produkte als Aktivkohle.

Darüberhinaus können die erhaltenen, festen Produkte einer an sich für Aktivkohle üblichen Aktivierungsbehandlung unterworfen werden, wodurch ein Anstieg des Porenvolumens bei auf 1200 m²/g erzielt werden kann. Derartige Aktivkohle eignet sich insbesondere zur Adsorption von Gasen.

### Beispiel

Mit 65 kg Teeröl pro m³ impräniertes Fichtenholz wird in 2 x 2,5 x 0,5 cm große Scheibchen zersägt und diese in einem flachen, metallenen Behälter, versehen mit einer Gasaustrittsöffnung, innerhalb von 10 min auf etwa 280°C und danach innerhalb von 20 min auf etwa 500°C erhitzt und 30 min bei dieser Temperatur belassen. Der aus der Gasaustrittsöffnung entweichende Qualm wurde abgefackelt.

Nach dem Abkühlen verbleibt ein holzkohleartiges Produkt mit einer scheinbaren Dichte von 0,4, das sich leicht entzünden läßt und ohne Flamme weiterbrennt. Das Produkt enthält keine extrahierbaren aromatischen Verbindungen. Im Gegensatz zu entsprechender Holzkohle aus nicht imprägniertem Fichtenholz ist der Strich auf Papier deutlich schwächer.

## Patentansprüche

1. Verfahren zur Entsorgung von mit Teeröl imprägniertem Holz, **dadurch gekennzeichnet,** daß es unter Luftabschluß einer thermischen Behandlung im Temperaturbereich von 450-700° C unterworfen wird und dabei zu einem Produkt umgewandelt wird, das frei ist von toxischen Stoffen, insbesondere von polycyclischen aromatischen Kohlenwasserstoffen.

2. Verfahren nach Anspruch 1, **dadurch gekennzeichnet,** daß die Wärmebehandlung im Bereich von 450-600° C erfolgt.

3. Verfahren nach den Ansprüchen 1 und 2, **dadurch gekennzeichnet,** daß die Wärmebehandlung unter Unterdruck erfolgt.

4. Verfahren nach den Ansprüchen 1 und 2, **dadurch gekennzeichnet,** daß die Wärmebehandlung bei Normaldruck erfolgt.

5. Verfahren nach den Ansprüchen 1 und 2, **dadurch gekennzeichnet,** daß die Wärmebehandlung unter Überdruck erfolgt.

6. Verfahren nach den Ansprüchen 1, 2, 4 oder 5, **dadurch gekennzeichnet,** daß die Wärmeübertragung mit einem 500-600° C heißen Spülgas erfolgt.

7. Verfahren nach den Ansprüchen 1 bis 6, **dadurch gekennzeichnet,** daß die bei der Wärmebehandlung entstehenden flüchtigen Verbindungen mit einem Siedepunkt oberhalb 30° C kondensiert und in an sich bekannter Weise aufgearbeitet werden.

8. Verfahren nach einem der Ansprüche 1 bis 7, **dadurch gekennzeichnet,** daß das erhaltene feste Produkt einer Aktivierungsbehandlung unterworfen wird.

## Claims

1. A process for the disposal of wood impregnated with tar oil, **characterized in that** it is subjected to heat treatment in a temperature range of from 450 to 700 °C with the exclusion of air and is converted into a product free of toxic substances, in particular of polycyclic aromatic hydrocarbons.

2. A process according to claim 1, **characterized in that** the heat treatment is carried out in the range of from 450 to 600 °C.

3. A process according to claims 1 and 2, **characterized in that** the heat treatment is carried out under reduced pressure.

4. A process according to claims 1 and 2, **characterized in that** the heat treatment is carried out under normal pressure.

5. A process according to claims 1 and 2, **characterized in that** the heat treatment is carried out under increased pressure.

6. A process according to claims 1, 2, 4 or 5, **characterized in that** the heat transfer is carried out with a hot scavenging gas at from 500 to 600 °C.

7. A process according to claims 1 to 6, **characterized in that** the volatile compounds with a boiling point above 30 °C formed during the heat treatment are condensed and are worked up in a manner known per se.

8. A process according to one of claims 1 to 7, **characterized in that** the solid product obtained is subjected to an activation treatment.

## Revendications

1. Procédé pour l'élimination de bois imprégné d'huile de goudron, caractérisé en ce qu'il est soumis à un traitement thermique à l'abri de l'air dans une plage de température de 450-700°C et qu'il est ainsi transformé en un produit qui est exempt de substances toxiques en particulier d'hydrocarbures aromatiques polycycliques.

2. Procédé selon la revendication 1, caractérisé en ce que le traitement thermique est conduit dans la plage de 450 à 600°C.

3. Procédé selon les revendications 1 et 2, caractérisé en ce que le traitement thermique s'effectue sous pression réduite.

4. Procédé selon les revendications 1 et 2, caractérisé en ce que le traitement thermique s'effectue à la pression normale.

5. Procédé selon les revendications 1 et 2, caractérisé en ce que le traitement thermique s'effectue en surpression.

6. Procédé selon les revendications 1, 2, 4 ou 5, caractérisé en ce que le transfert thermique s'effectue avec un gaz de rinçage brûlant à une température de 500-600°C.

7. Procédé selon les revendications 1 à 6, caractérisé en ce que les composés volatiles d'un point d'ébullition supérieur à 30°C formés au cours du traitement thermique sont condensés et retraités d'une manière connue per se.

8. Procédé selon l'une des revendications 1 à 7, caractérisé en ce que le produit solide obtenu est soumis à un traitement d'activation.
